(19) Europäisches Patentamt
European Patent Office
Office européen des brevets

(11) Numéro de publication: **0 247 924 B1**

# (12) FASCICULE DE BREVET EUROPEEN

(45) Date de publication du fascicule du brevet: **25.07.90**

(51) Int. Cl.⁵: **C01B 17/45**, C01G 43/06

(21) Numéro de dépôt: **87401095.2**

(22) Date de dépôt: **14.05.87**

(54) **Procédé de préparation de tétrafluorure de soufre par réduction d'un fluorure d'uranium.**

(30) Priorité: **16.05.86 FR 8607062**

(43) Date de publication de la demande: **02.12.87 Bulletin 87/49**

(45) Mention de la délivrance du brevet: **25.07.90 Bulletin 90/30**

(84) Etats contractants désignés: **DE GB IT NL**

(56) Documents cités: **FR-A- 1 586 833**

(73) Titulaire: **COMMISSARIAT A L'ENERGIE ATOMIQUE, 31/33, rue de la Fédération, F-75015 Paris(FR)**

(72) Inventeur: **Folcher, Gérard, Décédé, décédé(FR)**
Inventeur: **Lambard, Jacques, 72, rue de Chalais, F-94240 L'Hay-Les-Roses(FR)**

(74) Mandataire: **Mongrédien, André et al, c/o BREVATOME 25, rue de Ponthieu, F-75008 Paris(FR)**

EP 0 247 924 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de préparation de tétrafluorure de soufre.

De façon plus précise, elle concerne la préparation de tétrafluorure de soufre par réduction d'un fluorure d'uranium.

Le tétrafluorure de soufre est un agent de fluoration doux utilisé surtout en chimie organique pour la synthèse de produits fluorés en raison de son action sélective sur certains groupements. Ceci le rend utile dans différents domaines, par exemple en biologie, en pharmacie et en chimie des lubrifiants et des huiles. On peut également l'utiliser en chimie minérale pour la synthèse de produis fluorés comme les fluorures et les oxyfluorures, en le faisant réagir avec des oxydes et des sulfures ou avec des fluorures. Le tétrafluorure de soufre est aussi un intermédiaire pour la synthèse de l'hexafluorure de soufre $SF_6$ qui peut être obtenu par réaction chimique de $SF_4$ avec un agent oxydant fluorant tel que le fluor.

Différents procédés peuvent être utilisés pour réaliser la synthèse du tétrafluorure de soufre.

Parmi ces procédés, certains font appel à la réaction de l'élément soufre ou d'un composé du soufre avec un agent de fluoration tel que $CoF_3$, $F_2$, $UF_6$, etc. Ainsi, le brevet français FR-A-1 586 833 du Commissariat à l'Energie Atomique décrit un procédé de préparation de tétrafluorure de soufre par réaction directe du soufre avec de l'hexafluorure d'uranium. On connaît également un procédé de préparation de tétrafluorure de soufre par réaction d'hexafluorure d'uranium avec de l'hydrogène sulfuré ou du disulfure de carbone, comme il est décrit par L.E. TREVOROW, J. FISCHER et W.H. GUNTHER dans Inorg. Chem. Vol. 2, n°6, p. 1281 à 1284 (1963). On peut encore préparer du tétrafluorure de soufre par réaction d'hexafluorure d'uranium avec du chlorure de soufre $SCl_2$ comme il est décrit par L.B. ASPREY et E.M. FOLTYN dans J. of Fluorine Chem., vol. 20, p. 277 à 280 (1982).

Ces procédés connus présentent l'inconvénient d'utiliser comme produit de départ de l'hexafluorure d'uranium qui est un oxydant puissant dont les propriétés peuvent être mieux utilisées dans d'autres réactions que la synthèse du tétrafluorure de soufre.

La présente invention a précisément pour objet un procédé de préparation de tétrafluorure de soufre qui pallie cet inconvénient, en utilisant comme produit de départ d'autres fluorures d'uranium que l'hexafluorure d'uranium $UF_6$.

Le procédé selon l'invention de préparation de tétrafluorure de soufre, consiste à réduire un fluorure d'uranium de formule $UF_x$ avec $4<x\leq5$ au moyen d'un agent réducteur constitué par du soufre ou un composé du soufre.

Selon l'invention, on utilise ainsi comme produit de départ un fluorure d'uranium de valence inférieure à (VI), c'est-à-dire un fluorure de valence (V) ou de valence située entre (IV) et (V), pour oxyder du soufre élémentaire ou un composé du soufre et produire, d'une part, du $SF_4$ et, d'autre part, du tétrafluorure d'uranium $UF_4$.

On précise que dans l'invention, le fluorure d'uranium $UF_x$ peut être du pentafluorure d'uranium, un fluorure intermédiaire entre $UF_4$ et $UF_5$ comme $U_2F_9$, $U_4F_{17}$, ou un mélange de ces différents fluorures.

Dans ces fluorures d'uranium de formule $UF_x$, l'énergie de liaison uranium-fluor est beaucoup plus importante que celle de la liaison uranium-fluor dans le cas de l'$UF_6$ gazeux. En effet, dans le cas de $UF_6$ gazeux, l'énergie de liaison $F_5U$-F est de 272 $kJ.mol^{-1}$ (65 K $cal.mol^{-1}$) alors que dans le cas des fluorures $UF_x$, l'énergie de liaison F-$UF_{x-1}$ va de 427 $kJ.mol^{-1}$ (102 $k.cal.mol^{-1}$) pour $UF_5$ à 619 $kJ.mol^{-1}$ (148 $k.cal.mol^{-1}$) pour $UF_4$. Aussi, ces fluorures sont beaucoup moins réactifs que l'hexafluorure d'uranium, mais ils peuvent convenir pour fabriquer du tétrafluorure de soufre à partir de soufre ou d'un composé de soufre.

Le procédé de l'invention est de ce fait particulièrement avantageux car les fluorures d'uranium de formule $UF_x$ sont des produits difficilement utilisables qui sont obtenus par exemple lors de la fabrication d'hexafluorure de soufre par réaction d'hexafluorure d'uranium avec le tétrafluorure de soufre. Ainsi, grâce au procédé de l'invention, ces fluorures d'uranium trouvent une utilité en permettant de plus de régénérer le réactif de départ utilisé pour la fabrication de l'hexafluorure de soufre.

Les fluorures d'uranium de formule $UF_x$ utilisés dans l'invention ne sont pas thermodynamiquement stables et sont hydrolysables, mais l'on peut grâce à l'invention, les stabiliser à la valence (IV) sous la forme de $UF_4$ tout en préparant le tétrafluorure de soufre.

En effet, par réaction de fluorure $UF_x$ avec du soufre ou un composé de soufre, on forme du tétrafluorure d'uranium qui est un composé ionique, non hydraté, ne présentant pas de tension de vapeur appréciable, peu soluble dans l'eau et difficilement soluble dans les acides et les bases. De plus, le tétrafluorure d'uranium ne corrode ni les métaux, ni les matériels de synthèse hydrocarbonés, de sorte que son inertie chimique aux températures usuelles le rend apte au stockage. Par ailleurs, le tétrafluorure d'uranium peut être utilisé pour la préparation d'uranium métal par réduction avec le calcium ou le magnésium.

Le procédé de l'invention présente ainsi de nombreux avantages car il permet, non seulement de réaliser la synthèse du tétrafluorure de soufre, mais encore de convertir un fluorure d'uranium non stable en un produit stable, ayant par ailleurs une utilisation intéressante.

Comme on l'a vu précédemment, l'agent réducteur utilisé dans l'invention peut être constitué par du soufre ou un composé du soufre. Les composés du soufre susceptibles d'être utilisés sont en particulier les halogénures de soufre, par exemple les chlorures et les bromures de soufre de formule $S_2Br_2$, $SCl_4$, $S_2Cl_2$ et $SCl_2$ et les sous-fluorures de soufre tels que $S_2F_2$, le sulfure de carbone de formule $CS_2$ et l'hydrogène sulfuré $H_2S$.

Pour mettre en oeuvre le procédé de l'invention,

on peut faire réagir le fluorure d'uranium $UF_x$ en phase solide, en phase liquide ou en solution avec l'agent réducteur en phase gazeuse, en phase liquide ou en solution.

Lorsqu'on utilise du fluorure d'uranium en phase solide, l'agent réducteur peut être sous forme de gaz ou sous forme liquide.

Les agents réducteurs sous forme de gaz peuvent être constitués par :

a) - de la vapeur de soufre, éventuellement en présence de chlore, de brome et/ou d'halogénures de soufre,

b) - un sous-fluorure de soufre tel que $S_2F_2$,

c) - un halogénure de soufre tel que le bromure de soufre $S_2Br_2$ ou un chlorure de soufre choisi parmi $S_2Cl_2$ et $SCl_2$ et leurs mélanges, en présence éventuellement de l'halogène libre correspondant, ou

d) - un composé moléculaire du soufre tel que $CS_2$ ou $H_2S$.

L'agent réducteur sous forme liquide peut être du soufre liquide ou un composé moléculaire de soufre liquide, par exemple un halogénure de soufre comme le monobromure de soufre $S_2Br_2$ ou le monochlorure de soufre $S_2Cl_2$.

Lorsqu'on réalise la réaction à partir de fluorure d'uranium de formule $UF_x$ en phase liquide, l'agent réducteur est également sous form liquide afin de réaliser la réaction en phase homogène liquide. Dans ce cas, l'agent réducteur peut être du soufre liquide.

Lorsque l'on réalise la réaction à partir de fluorures d'uranium $UF_x$ en solution, on peut utiliser comme agent réducteur du soufre ou des composés de soufre solubles dans la solution.

D'autres caractéristiques et avantages de l'invention apparaîtront mieux à la lecture de la description qui suit de différents modes de mise en oeuvre du procédé de l'invention.

Selon un premier mode de mise en oeuvre du procédé de l'invention, on fait réagir le fluorure d'uranium $UF_x$ avec $4<x\leq5$, sous la forme de particules solides anhydres avec un agent réducteur sous forme gazeuse constitué par de la vapeur de soufre, à une température de 100° à 400°C. De préférence, la pression de la vapeur de soufre est comprise entre $10^2$ et $5.10^4$ Pa.

De préférence, les particules solides ont une granulométrie moyenne allant de 0,02 à 1 µm.

Dans ce cas, lorsque le fluorure d'uranium $UF_x$ est constitué de $UF_5$, $U_2F_9$, $U_4F_{17}$ ou leurs mélanges, on obtient les réactions suivantes :

$1/2n\ S_{2n} + 4\ UF_5 \rightarrow SF_4 + 4UF_4$ (1)

$1/2n\ S_{2n} + 8\ U_2F_9 \rightarrow SF_4 + 16UF_4$ (2)

$1/2n\ S_{2n} + 16\ U_4F_{17} \rightarrow SF_4 + 64UF_4$ (3)

et de façon générale :

$1/2n\ S_{2n} + 4\ (x-4)^{-1}\ UF_x \rightarrow SF_4 + 4(x-4)^{-1}\ UF_4$.

Dans ces réactions, $S_{2n}$ représente les molécules de soufre gazeux avec n étant égal à 1, 2, 3 ou 4.

Ces réactions conduisent ainsi à la synthèse de tétrafluorure de soufre, mais l'on peut également obtenir des réactions secondaires qui, dans le cas de $UF_5$, correspondent aux schémas réactionnels suivants :

$1/2n\ S_{2n} + 2\ UF_5 \rightarrow SF_2 + 2UF_4$ (4)

$1/n\ S_{2n} + 2\ UF_5 \rightarrow S_2F_2 + 2UF_4$ (5)

dans lesquels $S_{2n}$ représente les molécules de soufre gazeux avec n pouvant avoir les valeurs 1, 2, 3 ou 4, et $S_2F_2$ est soit FSSF, soit $SSF_2$.

Les paramètres qui permettent d'orienter les réactions vers la production de tétrafluorure de soufre sont en particulier la température qui agit sur la tension de vapeur du soufre et la dismutation des sous-fluorures d'uranium, la granulométrie du fluorure d'uranium $UF_x$ et les concentrations respectives de $UF_x$ et de soufre dans le milieu réactionnel.

Généralement, la température utilisée est de 150 à 400°C. Toutefois, on préfère opérer à des températures de 350 à 400°C car les cinétiques réactionnelles entre les molécules de soufre vapeur et les particules solides de $UF_x$ sont assez lentes à des températures inférieures. La raison en est que le soufre sous forme de vapeur n'est pas à l'état atomique mais associé en molécules $S_2$, $S_4$, $S_6$ et $S_8$ dont la concentration relative varie avec la température tandis que les pressions partielles croissent avec le nombre d'atomes. Toutefois, il n'est pas souhaitable d'opérer à des températures supérieures à 400°C, car la tenue à la corrosion des matériaux métalliques formant généralement le réacteur est moins bonne à ces températures. Par ailleurs, on peut observer dans de telles conditions la formation d'hexafluorure de soufre $SF_6$ provenant non de la dismutation du $SF_4$ qui est stable à ces températures, mais de la fluoration de $SF_4$, ainsi qu'une formation possible de sulfures d'uranium tels que US et $US_2$ par réaction de $UF_4$ avec le soufre surtout en présence de matériaux métalliques.

Les proportions de $UF_x$ et de S utilisées ont également une influence sur le résultat obtenu. En effet, si l'on opère en utilisant des proportions $[UF_x]/[S]$ proches de la stoechiométrie des réactions (1) à (3), c'est-à-dire $[UF_x]/[S] = 4(x-4)^{-1}$ les bilans effectués sur les produits s'accordent avec ces réactions.

L'exemple 1 qui suit illustre la réduction de pentafluorure d'uranium par du soufre selon le premier mode de mise en oeuvre du procédé d l'invention, en utilisant des proportions $[UF_x]/[S]$ correspondant à la stoechiométrie.

Dans cet exemple, comme dans tous les exemples qui suivront, le pentafluorure d'uranium a été obtenu par photodécomposition sous rayonnements ultraviolets de $UF_6$ en présence de $SF_4$ à une longueur d'onde de 200 à 400 nm, ce qui conduit à l'obtention de $UF_5$ ne contenant pas de $UF_4$. La réaction est réalisée en utilisant comme source de rayonnements ultraviolets un laser à impulsions YAG:$Nd^{3+}$ muni d'un doubleur et d'un quadrupleur de fréquence délivrant un rayonnement à 266 nm, les impulsions ayant une énergie rayonnante de 5mJ à la cadence de 2Hz.

Exemple 1

Dans un réacteur en Monel® en forme de U renversé, on introduit dans le fond d'une branche 5g d'$UF_5$ anhydre ($1,5.10^{-2}$mol) que l'on étale en une mince couche uniforme. On place dans l'autre branche du réacteur 0,12g de soufre cristallisé ($3,75.10^{-3}$ atome.g). La concentration des réactants est telle que $[UF_5]/[S]=4$. Le réacteur purgé est chauffé à 350°C, le doigt de gant contenant le soufre étant maintenu 10°C plus bas. L'avancement de la réaction est suivi sur un manomètre. Après 30 minutes de réaction, les gaz condensés et analysés par spectroscopie IR révèlent 0,28g de $SF_4$ et environ 30mg de $S_2F_2$ et des traces de $SOF_2$ et de HF. L'analyse du composé solide montre qu'il s'agit de $UF_4$ avec des traces de $UF_5$. Ainsi, quand on se trouve dans les conditions de stoechiométrie avec $UF_5$ et la vapeur de soufre, on vérifie bien la relation (1). Le défaut en fluor dans le bilan de la réaction est attribué à la corrosion du réacteur.

Toutefois, l'utilisation des proportions stoechiométriques n'est pas impérative pour orienter la synthèse vers la production de $SF_4$. En effet, les rendements de conversion du soufre en $SF_4$ sont plutôt supérieurs lorsqu'on opère avec des proportions supérieures aux proportions stoechiométriques, c'est-à-dire $[UF_x] / [S] > 4(x-4)^{-1}$. Cependant, l'utilisation de concentrations en fluorure d'uranium supérieures à la stoechiométrie nuit au plein emploi des fluors disponibles dans les fluorures d'uranium donneurs.

L'exemple 2 qui suit illustre la réduction de $UF_5$ par la vapeur de soufre selon le premier mode de mise en oeuvre du procédé, avec une proportion $[UD_5] / [S]$ supérieure à la stoechiométrie.

Exemple 2

On opère dans les mêmes conditions que pour l'exemple 1 mais avec 90mg de soufre ($2,8.10^{-3}$ atome.g) de sorte que le rapport $[UF_5] / [S] = 5.3$. Dans ces conditions on recueille à la disparition de la vapeur de soufre 0,27g de $SF_4$, des traces de $SOF_2$ mais pas de $S_2F_2$ qui a complètement réagi. Le solide est un mélange de $UF_4$ et $UF_5$ résiduel.

Ainsi, lorsque l'on se trouve en excès stoechiométrique déterminé par la réaction (1), on transforme le $S_2F_2$ formé comme dans l'exemple 1 en $SF_4$ selon la réaction :

$$S_2F_2 + 6UF_5 \rightarrow 2SF_4 + 6UF_4$$

Généralement la proportion de réactants $[UF_x]/[S]$ sera dans l'intervalle $(x-4)^{-1}$ à $8(x-4)^{-1}$, et de préférence pour privilégier la synthèse vers $SF_4$ entre $4(x-4)^{-1}$ et $8(x-4)^{-1}$.

Ainsi, dans l'exemple 2 où le fluorure de départ est $UF_5$ et où l'on utilise une proportion $[UF_5] / [S]$ de 5,3, on obtient en fin de réaction des produits solides constitués par un mélange de $UF_4$, $U_2F_9$, $U_4F_{17}$ et même $UF_5$. Ainsi, les fluorures d'uranium utilisés se trouvent incomplètement réduits et l'on obtient en fin d'opération un mélange d'uranium à des valences allant de (IV) à (V).

L'exemple 3 qui suit illustre la réduction de $UF_5$ par de la vapeur de soufre selon le premier mode de mise en oeuvre du procédé, mais en utilisant des proportions $[UF_5]/[S]$ inférieures aux proportions stoechiométriques.

Exemple 3

On opère dans les mêmes conditions que l'exemple 1, mais avec 2,5g d'$UF_5$ ($7,5.10^{-3}$ mol), de sorte que le rapport de réactants $[UF_5]/[S]$ est ramené à 2. Après 30 minutes de réaction, la phase gazeuse est composée de 92mg de $SF_4$ et 142mg de $S_2F_2$ avec des traces de $SOF_2$ et de HF. Le solide est de l'$UF_4$ pour 2,31g sans $UF_5$ ni fluorure intermédiaire, mais avec des traces de soufre (1% en poids).

Ainsi, quand on utilise des proportions $[UF_x]/[S]$ inférieures aux proportions stoechiométriques, on favorise la pleine réduction des fluorures d'uranium en $UF_4$, mais les réactions annexes (4) et (5) qui conduisent à la formation de sous-fluorures de soufre, se produisent également et la proportion de sous-fluorure formé par rapport au $SF_4$ produit augmente avec le rapport $[S]/[UF_x]$.

Généralement, pour avoir un bon rendement de réduction du fluorure d'uranium et éviter une production importante de sous-fluorures de soufre, on opère avec un rapport $[UD_x]/[S]$ légèrement inférieur à la stoechiométrie, à savoir avec un rapport allant de $(x-4)^{-1}$ à $3,8(x-4)^{-1}$.

La manière de réaliser la réaction a également une importance sur les résultats obtenus. En effet, on peut réaliser la réaction en réacteur clos ou au contraire effectuer celle-ci en continu en opérant en flux. Généralement, on préfère opérer en continu car on obtient ainsi de meilleurs résultats. En effet, la réalisation de la synthèse en réacteur clos présente les inconvénients suivants :

- les cinétiques réactionnelles sont plus lentes par suite d'un mauvais contact entre la phase gazeuse et la poudre pulvérulente de fluorure d'uranium ; de ce fait, la réaction de réduction du fluorure d'uranium $UF_x$ est incomplète et il est difficile de contrôler l'avancement de cette réaction,
- l'extraction mécanique des composés solides formés lors de la réaction après évacuation de la phase gazeuse pose certains problèmes de mise en oeuvre,
- il est nécessaire de déshydrater les appareillages destinés à recevoir et à véhiculer les réactifs anhydres pour ne pas obtenir un accroissement des fluorures annexes $SOF_2$ et HF,
- le procédé est plus difficile à mettre en oeuvre à cause des discontinuités et des manipulations en atmosphère sèche.

Aussi, on préfère effectuer la réaction en flux dans un réacteur où les particules de fluorure d'uranium $UF_x$ s'écoulent par gravité ou sont transportées mécaniquement ou par fluidisation gazeuse et sont amenées à réagir avec la vapeur de soufre mise en circulation dans le réacteur. Dans le cas d'un transport pneumatique des particules solides de fluorure d'uranium, on peut utiliser un gaz porteur constitué par un gaz neutre strictement anhydre comme l'azote ou l'argon. Ce gaz peut aussi servir à ajuster la pression de la phase gazeuse contenant la vapeur de soufre avant son introduction dans le réacteur.

Dans un tel réacteur, on peut introduire la vapeur de soufre en plusieurs endroits répartis le long du parcours du flux de particules solides de fluorure d'uranium afin d'obtenir un bon déroulement de la réaction.

Pour réaliser cette réaction en flux, on peut utiliser en particulier des réacteurs à lit fluidisé soufflé ou à lit transporté.

Selon une première variante de ce premier mode de mise en oeuvre du procédé de l'invention, on améliore la réduction du fluorure d'uranium $UF_x$ par la vapeur de soufre en opérant en présence de chlore ou de brome gazeux. Ceci conduit à la formation de composés chlorés ou bromés de soufre qui sont des réactifs très actifs, réagissant avec $UF_5$ selon les schémas réactionnels suivants dans le cas du chlore :

$1/n\ S_{2n} + Cl_2 \rightarrow S_2Cl_2$ (6)

$1/2n\ S_{2n} + Cl_2 \rightarrow SCl_2$ (7)

$S_2Cl_2 + 8UF_5 \rightarrow 2SF_4 + 8UF_4 + Cl_2$ (8)

$SCl_2 + 4UF_5 \rightarrow SF_4 + 4UF_4 + Cl_2$ (9)

Ces réactions ont des cinétiques réactionnelles plus rapides et la réaction globale peut s'écrire :

$$1/2n\ S_{2n} + 4UF_5 \xrightarrow{Cl_2} SF_4 + 4UF_4 \quad (10)$$

On obtient ainsi en fin de réaction une phase gazeuse comprenant du $SF_4$, du $S_2F_2$, du $Cl_2$ et leurs dérivés. Aux températures utilisées (100 à 350°C) il ne se forme pas de composés halogénés mixtes d'uranium, du type $UF_aCl_b$ ou de composés halogénés mixtes de soufre ; de préférence, la température est comprise entre 200 et 300°C. De plus en raison de la présence de chlore, on améliore la production de $SF_4$ par rapport au sous-fluorure de soufre $S_2F_2$, principalement quand $[UF_x]/[S]>4(x-4)^{-1}$.

L'exemple 4 qui suit illustre la réduction de $UF_5$ par S selon cette variante de mise en oeuvre du procédé.

<u>Exemple 4</u>

On opère dans les mêmes conditions que dans l'exemple 1 mais avec le réacteur à 300°C et en présence de 2000Pa de chlore. On recueille 0,34g de $SF_4$ et environ 10mg de $SOF_2$ mais sans $S_2F_2$.

L'accroissement de la pression de chlore est bénéfique pour la synthèse et l'on utilise des quantités de chlore dans le réacteur en flux correspondant à 0,2-1,5 fois la pression du soufre vapeur, et préférentiellement une valeur comprise entre 0,5 et 1,2 fois. Par exemple quand la température est de 300°C, la pression de soufre étant de $6.10^3$ Pa, la pression de chlore est de $10^3$ à $7.10^3$ Pa.

Lorsqu'on opère avec un excès de soufre par rapport à la stoechiométrie, on facilite comme précédemment la réduction complète de l'uranium à la valence (IV) et le soufre excédentaire se retrouve alors sous la forme de $S_2Cl_2$, $SCl_2$ ou même $S_{2n}$ selon les quantités de soufre et de chlore utilisées. En défaut de soufre par rapport au chlore, le chlore gazeux apparaît en fin de réaction.

On peut obtenir le même effet en utilisant du brome au lieu de chlore pour catalyser les réactions (1) à (3), mais dans ce cas, il est préférable d'opérer à des températures de 100 à 200°C. En effet, pour des températures supérieures, l'effet catalytique diminue, probablement en raison de la forte dissociation de $S_2Br_2$ gazeux en soufre vapeur et brome libre. Comme précédemment, le brome apparaît en fin de réaction dans la phase gazeuse sous la forme de $S_2Br_2$ et/ou de $Br_2$ selon que l'on opère avec un excès ou non de soufre. Le brome n'apparaît pas non plus dans les composés solides d'uranium recueillis. La pression de l'halogène, chlore ou brome, ne dépassera pas $5.10^4$ Pa.

Selon une deuxième variante du premier mode de mise en oeuvre du procédé de l'invention, on catalyse les réactions (1) à (3) en réalisant la réduction du fluorure d'uranium par la vapeur de soufre, en présence d'halogénures de soufre gazeux tels que les chlorures et les bromures de soufre. Dans ces conditions, lorsque l'halogénure est un chlorure de soufre, les réactions (8) et (9) se produisent et sont suivies des réactions (6) et (7) qui régénèrent les chlorures de soufre de départ. Dans ces conditions, la phase gazeuse obtenue en fin de réaction comprend outre les produits de la réaction, du $S_2Cl_2$ du $SCl_2$ et du $Cl_2$ si l'on opère avec un rapport $[UF_x]/[S]$ correspondant sensiblement à la stoechiométrie. On précise que [S] représente la concentration globale en soufre des réactants. Lorsque l'on utilise le chlorure de soufre $S_2Cl_2$ on peut réaliser la réaction jusqu'à des températures de 300°C car le monochlorure de soufre reste sous la forme de molécules jusqu'à ces températures. En revanche, lorsqu'on utilise du bichlorure de soufre de formule $SCl_2$, il est préférable d'opérer à des températures inférieures car la dissociation du bichlorure en $Cl_2$ et $S_2Cl_2$ est importante à 100°C.

L'exemple 5 qui suit illustre la réduction de $UF_5$ selon cette deuxième variante du premier mode de mise en oeuvre du procédé de l'invention.

<u>Exemple 5</u>

Les conditions expérimentales sont celles de l'exemple 4, mais on ajoute 0,1g de $S_2Cl_2$ (7,46.10 mol) à la place du chlore, de sorte que la pression dans le réacteur est de 3520 Pa. Le rapport des réactifs se trouve ramené de 4 à 2,9. Après 30 minutes de réaction à 300°C, la phase gazeuse contient 0,31g de $SF_4$, 86mg de $S_2F_2$ et la totalité du $S_2Cl_2$. Ainsi en présence de $S_2Cl_2$, on améliore la conversion du soufre en $SF_4$ quand le rapport des constituants est $[UF_5]/[S]<4$. Le solide recueilli est de l'$UF_4$ dont la teneur en soufre résiduel n'excède par 0,5%.

On peut obtenir un effet similaire en utilisant le monochlorure de brome $S_2Br_2$ à des températures de 100 à 200°C. Cependant, cet halogénure est

moins stable que $S_2Cl_2$ et, de ce fait, son effet catalytique est moins bon.

Dans cette deuxième variante du premier mode de mise en oeuvre du procédé, on utilise des quantités d'halogénures telles que leur pression dans le réacteur corresponde de 0,2 à 4 fois la pression de la vapeur de soufre ; par exemple, quand la température est de 350°C, la pression de $S_2Cl_2$ est comprise entre $5.10^3$ et $10^5$ Pa. Enfin, la pression partielle de l'halogénure ne dépassera pas $2.10^5$ Pa.

Dans ces variantes du premier mode de mise en oeuvre de la synthèse de $SF_4$, le rapport $[UF_x]/[S]$ est de $(x-4)^{-1}$ à $6(x-4)^{-1}$, et de préférence de $4(x-4)^{-1}$ à $6(x-4)^{-1}$. Dans un souci de meilleure réduction des fluorures d'uranium jusqu'à obtenir $UF_4$ pur, la proportion des constituants est dans l'intervalle de $2(x-4)^{-1}$ à $3,8(x-4)^{-1}$.

Bien entendu dans ce premier mode de mise en oeuvre du procédé de l'invention, on peut combiner l'effet des halogènes à l'état pur et des halogénures en réalisant la réaction de réduction du fluorure d'uranium $UF_x$ par le soufre en présence d'un halogène et de l'halogénure de soufre correspondant, par exemple en présence de $Br_2$ et de $S_2Br_2$ ou en présence de $Cl_2$ et de $S_2Cl_2$ et/ou de $SCl_2$.

Dans tous les cas, la pression totale d'halogène dans le réacteur, sous forme libre ou d'halogénure, correspondra de 0,2 à 4 fois la pression de vapeur de soufre, la pression totale d'halogène ne dépassant pas $2.10^5$ Pa.

Dans ces variantes du premier mode de mise en oeuvre du procédé, on peut introduire les réactifs gazeux servant de catalyseur à la réaction, tels que le chlore, le brome, les chlorures de soufre et le bromure de soufre, soit avec la vapeur de soufre, soit en partie ou en totalité avec le flux de particules solides de fluorure d'uranium $UF_x$ pour lequel ils peuvent servir de véhicule.

Lorsqu'on utilise comme catalyseur un chlorure ou un bromure de soufre, on peut synthétiser ces halogénures de soufre en faisant transiter l'halogène correspondant dans un réacteur rempli de soufre solide concassé à des températures de 30 à 100°C ou en saturant l'halogène sur une nappe de soufre liquide à 120-130°C. On peut aussi préparer ces halogénures par réaction de chlore ou de brome avec des sulfures métalliques.

De préférence, lorsqu'on utilise un catalyseur pour accélérer la réduction du fluorure d'uranium $UF_x$ par le soufre, on choisit la seconde variante qui consiste à utiliser comme catalyseur un chlorure ou un bromure de soufre.

Pour ne pas traiter de trop grandes quantités de catalyseur dans les opérations de recyclage du flux gazeux sortant du réacteur, on veille à assurer un écoulement lent du lit fluidisé de fluorure d'uranium, ce qui facilite la réduction complète du fluorure d'uranium en $UF_4$. De préférence, on introduit la vapeur de soufre tout le long de l'écoulement du flux dans le réacteur pour maintenir une pression partielle de soufre dans le réacteur proche de la tension de vapeur du soufre à la température de la réaction.

Les débits de soufre sont ajustés en fonction de la température du réacteur et du débit de fluorure d'uranium $UF_x$.

Dans ce premier mode de mise en oeuvre du procédé le flux comprend à la sortie du réacteur :
- une phase gazeuse comprenant le produit souhaité, c'est-à-dire $SF_4$, du sous-fluorure de soufre $S_2F_2$, un excès éventuel de vapeur de soufre, éventuellement un catalyseur, par exemple du chlore, du brome ou des composés tels que des chlorures de soufre et du bromure de soufre ayant joué un rôle catalytique, des produits de réactions annexes tels que $SOF_2$, $SO_2F_2$ et HF et éventuellement le gaz inerte véhiculant la phase solide ; et
- des particules solides de fluorure d'uranium ayant totalement ou partiellement réagi, du soufre cristallisé pouvant être fixé sur ces particules solides.

A la sortie du réacteur, il est donc nécessaire d'effectuer une séparation entre la phase solide contenant le fluorure d'uranium et la phase gazeuse décrite précédemment.

Cette opération doit :
- être réalisée sous atmosphère contrôlée strictement anhydre en dépression ou en surpression par rapport à la pression atmosphérique
- ne mettre en oeuvre que des matériaux ayant une bonne tenue aux agents fluorants, et
- permettre de retenir des particules d'au moins 0,01 à 0,1µm.

On peut effectuer cette séparation par sédimentation, par des méthodes inertielles (cyclones) ou par des méthodes de filtration mécanique ou électrique.

On sait que les opérations de séparation gaz-solides sont facilitées quand la taille des particules solides est forte. Cependant, dans ce mode de mise en oeuvre du procédé de l'invention, il est préférable d'opérer avec des particules de fluorure d'uranium de taille aussi réduite que possible pour avoir une bonne cinétique réactionnelle. Aussi, pour faciliter la séparation gaz-solide en sortie de réacteur, il est préférable de favoriser le grossissement des particules de tétrafluorure d'uranium obtenues avant de réaliser la séparation. Ceci peut être effectué en confinant le mélange des phases gazeuse et solide dans une enceinte chauffée entre 200 et 400°C pendant un temps suffisant pour permettre la formation d'agrégats, celle-ci étant facilitée lorsqu'on a une forte concentration de particules solides dans la phase gazeuse.

Par ailleurs, pour ne pas condenser le soufre sur les particules de tétrafluorure d'uranium lors de la séparation, il est nécessaire de réaliser cette séparation à une température suffisamment élevée, par exemple à une température de 150 à 300°C ; on peut ainsi limiter la pollution du tétrafluorure d'uranium par le soufre à une valeur inférieure à 1%.

Après cette opération, il est nécessaire de séparer de la phase gazeuse le produit de la réaction, soit le tétrafluorure de soufre. Généralement, on réalise cette séparation par liquéfaction du mélange gazeux, ce qui permet de dismuter les sous-fluorures de soufre de formule $S_2F_2$ en $SF_4$ selon la réaction :

$$2S_2F_2 \rightarrow SF_4 + 3/8\ S_8 \quad (11)$$

Cette liquéfaction est suivie d'une purification du gaz pour éliminer les impuretés constituées par HF et $SOF_2$ dans le cas où la réaction ne fait intervenir que la vapeur de soufre sans catalyseur halogéné.

Une autre façon de procéder est de faire réagir les sous-fluorures de soufre avec un agent de fluoration comme le fluor.

Dans le cas où la réaction a été effectuée en présence d'halogène et/ou d'halogénure, la phase gazeuse obtenue comprend 3 constituants principaux qui sont $SF_4$, $S_2X_2$, $X_2$ avec $X_2$ représentant $Cl_2$ ou $Br_2$, et des fluorures annexes possibles comme $SOF_2$ et HF. Dans ce cas, deux processus de séparation peuvent être envisagés selon que l'halogène est le chlore ou le brome.

Dans le cas où la phase gazeuse comprend du brome et/ou un bromure de soufre qui sont connus pour avoir de faibles tensions de vapeur à l'ambiante : (200 Torr, 27 kPa) pour le brome et quelques Torr (3 Torr, 400 Pa) pour le monobromure de soufre, on peut séparer facilement ces réactifs du $SF_4$. Ceci peut être réalisé en refroidissant la phase gazeuse à des températures de 250 à 170K pour ne retenir que le brome et le monobromure de soufre. On peut aussi refroidir le mélange gazeux à la température de l'azote liquide puis distiller ou sublimer la phase condensée maintenue jusqu'à la température de la carboglace pour laisser s'échapper le tétrafluorure de soufre dont la tension de vapeur est de 100 Torr (13,3 kPa) alors qu'elle n'est que de 0,1 Torr (13,3 Pa) pour $Br_2$. La liquéfaction préalable a l'avantage comme précédemment de permettre la dismutation de $S_2F_2$ en $SF_4$. On peut ensuite recycler dans le réacteur le condensat réchauffé constitué de brome et de monobromure de soufre.

Dans le cas où la réaction est conduite en présence d'un catalyseur à base de chlore, la séparation est plus difficile car le chlore et le tétrafluorure de soufre ont des tensions de vapeur comparables. La distillation d'un mélange binaire de $SF_4$ et de chlore est particulièrement laborieuse et ne peut être réalisée efficacement sans perte de l'un des constituants. Par ailleurs, le $SOF_2$ qui est toujours présent en petites quantités, a une tension de vapeur très légèrement inférieure à celle du $SF_4$ et participe aussi à la distillation. Bien que cette opération ne permette pas une séparation complète, le mélange ternaire de $Cl_2$, $SF_4$ et $SOF_2$ se trouve enrichi en chlore dans sa phase vapeur qui peut être recyclée dans le réacteur avec de petites quantités de $SF_4$.

Lorsque le catalyseur gazeux est un chlorure de soufre tel que $SCl_2$ ou $S_2Cl_2$, la séparation est plus facile,car on peut réaliser la condensation préférentielle de $S_2Cl_2$ qui est un liquide huileux bouillant à 138°C et du composé $SCl_2$ thermiquement moins stable entre 250 et 200K. On purifie ensuite la phase gazeuse qui est constituée majoritairement de $SF_4$.

On peut réaliser cette opération en refroidissant la phase gazeuse pour l'amener en phase liquide entre 155 et 200K, ce qui permet la transformation du $S_2F_2$ en $SF_4$ par dismutation. La phase liquide saturée en soufre maintenue entre 180 et 210K laisse le $SF_4$ en phase vapeur qui peut ainsi être extrait. Le condensat constitué de $S_2Cl_2$ et de soufre cristallisé peut être recyclé dans le réacteur pour la synthèse de $SF_4$.

Selon un second mode de mise en oeuvre du procédé de l'invention, on fait réagir les particules solides de fluorure d'uranium $UF_x$ avec un agent réducteur en phase gazeuse constitué par au moins un halogénure de soufre choisi parmi le bromure de soufre $S_2Br_2$ et les chlorures de soufre $S_2Cl_2$ et $SCl_2$, seuls ou en présence de l'halogène correspondant.

Dans ce cas, la pression partielle des halogénures choisis parmi les chlorures de soufre de formule $S_2Cl_2$ et $SCl_2$ et le bromure de soufre $S_2Br_2$ ne dépassera pas $2.10^5$ Pa. Dans le cas où l'halogène correspondant est aussi présent, sa concentration ne dépassera pas 10% de celle de l'halogénure.

L'exemple 6 qui suit illustre la réduction de pentafluorure d'uranium par $S_2Cl_2$.

<u>Exemple 6</u>

Dans cet essai on utilise un réacteur présentant un fond plat de grande surface, et équipé d'un manomètre de pression. On introduit 2,5g d'$UF_5$ ($7,5.10^{-3}$ mole) uniformément réparti sur le fond du réacteur, qui est alors purgé, et dans lequel on introduit 0,14g de $S_2Cl_2$ ($1,04.10^{-3}$ mole) sous la pression de 5210 Pa. Les réactants se trouvent être dans le rapport $UF_5$ / S =3,6. Le réacteur est chauffé à 300°C pendant 20 minutes. La nature des produits de la réaction est : 156 mg de $SF_4$, 28mg de $S_2F_2$, des traces de HF et de $SOF_2$ ainsi que 2,33g de $UF_4$ sans soufre (<0,1% en poids). La pression résiduelle de $S_2Cl_2$ est estimée à 330 Pa.

Dans ce second mode de mise en oeuvre du procédé, dans le cas des chlorures de soufre en présence ou non de chlore, on opère généralement à des températures de 100 à 350°C, et de préférence de 200 à 300°C, tandis que, dans le cas des bromures de soufre en présence ou non de brome, on opère à des températures de 100 à 200°C.

Ce procédé peut être mis en oeuvre en réacteur clos ou au contraire en flux continu.

De préférence, comme dans le premier mode de mise en oeuvre du procédé, on réalise la réaction en flux en mettant en circulation dans une enceinte les particules de fluorure d'uranium fluidisées par le réactif gazeux et/ou par un gaz porteur tel que l'azote ou l'argon.

Comme dans le premier mode de mise en oeuvre du procédé, on contrôle la réaction en agissant sur la température et sur les débits des réactifs mis en circulation dans le réacteur pour orienter la réaction vers la production de tétrafluorure de soufre.

La séparation des phases gazeuse et solide sortant du réacteur peut être effectuée comme précédemment et le traitement de la phase gazeuse pour récupérer le tétrafluorure de soufre peut être effectué comme pour les phases gazeuses obtenues dans le premier mode de mise en oeuvre du procédé utilisant des catalyseurs gazeux à base de chlore ou de brome.

Selon un troisième mode de mise en oeuvre du procédé de l'invention, on fait réagir des particules

solides de fluorure d'uranium $UF_x$ avec un agent réducteur en phase gazeuse constitué par de l'hydrogène sulfuré $H_2S$.

Lorsque le fluorure d'uranium est $UF_5$, la réaction correspond au schéma suivant :

$H_2S + 6UF_5 \rightarrow SF_4 + 6UF_4 + 2\ HF$ (12)

On obtient des réactions analogues avec $U_2F_9$ et $U_4F_{17}$.

La réaction est exothermique et le réacteur ne dépasse pas la température de 200°C.

La réaction peut être effectuée, soit en réacteur clos, soit en flux continu comme dans le premier mode de mise en oeuvre du procédé. De préférence, on réalise la réaction dans un réacteur en flux continu, à une température de 25 à 200°C, en utilisant un gaz porteur pour transporter les particules de fluorure d'uranium.

Pour obtenir une réduction la plus complète possible des fluorures d'uranium en $UF_4$, on opère avec un excès de composé soufré d'environ 30% par rapport aux proportions stoechiométriques nécessaires à la réaction.

La phase gazeuse sortant du réacteur comprend donc l'excès de réducteur $H_2S$, le tétrafluorure de soufre $SF_4$, du sous-fluorure de soufre, de l'acide fluorhydrique anhydre et des traces de $SOF_2$.

La phase solide est constituée de fluorure d'uranium comportant de petites quantités de soufre (0,1 à 1 %).

La séparation de la phase solide et de la phase gazeuse peut être réalisée comme dans le premier mode de mise en oeuvre du procédé et l'on peut ensuite séparer le tétrafluorure de soufre de la phase gazeuse par condensation fractionnée du mélange gazeux.

Selon un quatrième mode de mise en oeuvre du procédé de l'invention, on fait réagir des particules solides de fluorure d'uranium $UF_x$ avec un réducteur en phase gazeuse constitué par du sulfure de carbone $CS_2$. Le sulfure de carbone réduit en effet $UF_5$ et les fluorures d'uranium intermédiaires en $UF_4$ dès la température de 25°C. La réaction est exothermique et lorsqu'elle est réalisée à la température ambiante avec un fort excès de $CS_2$ par rapport au fluorure d'uranium $UF_x$, on obtient en phase gazeuse des sulfures de trifluorométhyle, du $SF_4$, du $SOF_2$ et l'excès de $CS_2$.

Si on opère à des températures plus élevées allant jusqu'à 200°C, la phase gazeuse comprend de plus du $CF_4$ et du $SF_6$.

Dans ce quatrième mode de mise en oeuvre du procédé de l'invention, on peut réaliser la réaction en réacteur clos ou en flux continu. Comme précédemment, on réalise de préférence la réaction dans un réacteur en flux continu, à une température de 25 à 200°C, en utilisant un gaz inerte pour transporter ces particules d fluorure d'uranium.

On sépare la phase solide de la phase gazeuse sortant du réacteur en utilisant les méthodes décrites dans le premier mode de mise en oeuvre du procédé, puis on récupère le $SF_4$ présent dans la phase gazeuse en formant un composé d'addition entre $SF_4$ et un complexant tel que $BF_3$, $AsF_5$ ou $SbF_5$. Le complexe formé est solide et peut être isolé facilement de la phase gazeuse, on peut ensuite régénérer $SF_4$ par chauffage modéré du complexe.

Ainsi, une extraction spécifique du $SF_4$ de la phase gazeuse peut être réalisée grâce à la formation de ce complexe solide. Dans ce cas, les vapeurs non complexées, par exemple $SOF_2$ et $SF_6$ sont évacuées.

Ces complexes solides peuvent être formés avec des fluorures inorganiques qui présentent une acidité de Lewis. A titre d'exemples de tels complexes, on peut citer par ordre de stabilité décroissante de ceux-ci : $SbF_5.SF_4$, $AsF_5.SF_4$, $IrF_5.SF_4$, $BF_3.SF_4$, $PF_5.SF_4$, $GeF_4.2SF_4$ et $AsF_3.SF_4$.

Ces complexes couvrent une large gamme de stabilité thermique, puisque $SbF_5.SF_4$ fond à 253°C tandis que $AsF_3.SF_4$ se dissocie rapidement à -20°C. Tous ces complexes sont complètement dissociés en phase gazeuse.

Ainsi, la régénération du $SF_4$ à partir du complexe peut être obtenue par dissociation thermique et séparation en phase vapeur de $SF_4$ et du fluorure inorganique. On peut aussi traiter le complexe solide avec des réactifs tels que $SeF_4$, KF, NaF, HF, $(CH_3)_3N$ et $(C_2H_5)_2O$, qui ont une plus grande affinité pour le fluorure inorganique présentant une acidité de Lewis que pour $SF_4$. On forme ainsi des complexes tels que $SeF_4.BF_3$, $KSbF_6$, $NaBF_4$, $HF.AsF_5$, $(CH_3)_3N.BF_3$ et $(C_2H_5)_2O.BF_3$ qui sont solides et laissent $SF_4$ à l'état gazeux.

Selon un cinquième mode de mise en oeuvre du procédé de l'invention, on fait réagir des particules solides de fluorure d'uranium $UF_x$ avec un réducteur en phase liquide constitué par du soufre.

La réaction de réduction se produit dès la fusion du soufre, soit à 119°C pour le soufre prismatique et 112°C pour le soufre commun rhombique. Généralement, on opère à des températures de 120 à 160°C de préférence de 145 à 155°C, pour que le soufre liquide ait une viscosité faible. La réaction peut être effectuée en réacteur clos ou dans un réacteur à flux continu.

Dans le cas où l'on opère en réacteur clos, la poudre divisée de fluorure d'uranium solide est déposée sur une nappe de soufre liquéfié à 152°C et l'on maintient le reste du réacteur à une température supérieure, par exemple de 160°C, pour ne pas déplacer le soufre liquide par distillation-condensation. On utilise de préférence un fort excès de soufre par rapport à la quantité stoechiométrique nécessaire pour réduire le fluorure d'uranium $UF_x$ en $UF_4$ et l'on soutire périodiquement les gaz produits qui, après condensation du soufre vapeur à 25°C, sont majoritairement constitués de $S_2F_2$ avec du $SF_4$ et du $SOF_2$.

L'exemple 7 qui suit illustre la réduction de pentafluorure d'uranium par du soufre liquéfié à 152°C.

Exemple 7

Pour cet essai, on introduit simultanément en boîte à gant 2,5g de soufre ($7{,}8.10^{-2}$ atome.g) et 2,5 d'$UF_5$ ($7{,}5.10^{-3}$ mol) dans le fond d'un réacteur en Monel® plat, de sorte que les réactants sont dans le rapport $[UF_5]/[S]$ d'environ 0,1. Le réacteur est

chauffé à 152°C pendant 1 heure, puis ramené à la température ambiante, ce qui permet d'extraire les produits de la réaction : 0,30g de sous fluorure de soufre $S_2F_2$, 22mg de $SF_4$, des traces de FSSF et de $SOF_2$. Le solide résiduel est un mélange de fluorures d'uranium et de soufre qui n'ont pas été séparés.

Lorsqu'on opère en flux continu, on introduit les réactifs strictement anhydres soit séparément, soit sous forme de mélange solide, sur la sole chauffante d'un réacteur incliné et la réaction a lieu pendant que le mélange visqueux s'écoule dans le réacteur. On recueille les gaz de réaction et on les condense. Lorsqu'on opère en flux continu, la température est de préférence de 145 à 155°C. La proportion des réactifs correspond à un rapport$[UF_x]/[S]$ allant de $0,02(x-4)^{-1}$ à $2(x-4)^{-1}$.

La séparation soufre-$UF_4$ peut être réalisée par sublimation du soufre au-dessus de 120°C.

Selon un sixième mode de mise en oeuvre du procédé de l'invention, on fait réagir des particules de fluorure d'uranium $UF_x$ solides avec un agent réducteur en phase liquide constitué par du monobromure de soufre $S_2Br_2$ ou du monochlorure de soufre $S_2Cl_2$.

De préférence, on utilise le monochlorure de soufre qui est un liquide moins dense et plus stable thermiquement, ce qui permet de réaliser les réactions plus rapidement. De préférence, la concentration des réactifs est telle que $[UF_x]/[S]$ n'excède pas $(x-4)^{-1}$.

De préférence, on opère avec un fort excès d'halogénure, et l'on obtient en fin de réaction du $S_2F_2$, du $SF_4$ et du brome ou du chlore.

L'exemple 8 qui suit illustre ce sixième mode de mise en oeuvre du procédé de l'invention.

Exemple 8

On utilise pour cet essai un réacteur tubulaire en Monel® équipé d'un agitateur, d'un condenseur et d'un manomètre de pression. On introduit dans le réacteur 0,5g de $UF_5$ ($1,5.10^{-3}$ mol) et 8,5g de $S_2Cl_2$ liquide fraîchement distillé ($6,34.10^{-2}$ mol) de sorte que le rapport des réactants $[UF_5]/[S]$ est voisin de $10^{-2}$. Le réacteur est chauffé à 150°C pendant 40 minutes. Les produits de la phase gazeuse, hors la vapeur de chlore et du réactant sont $SF_4$ pour 28mg,$S_2F_2$ pour 17 mg et des traces de $SOF_2$. Après évacuation du $S_2Cl_2$ et traitement sous $Cl_2$ on recueille 452mg d'$UF_4$ exempt de soufre (<0,1%).

Dans le cas où l'on utilise $S_2Cl_2$, les réactions (8) et (9) décrites précédemment se produisent car une partie du chlore dissous dans $S_2Cl_2$ réagit avec celui-ci en solution homogène selon la réaction :

$S_2Cl_2 + Cl_2 \rightarrow 2SCl_2$ (13)

qui est catalysé par les chlorures supérieurs $SCl_4$ formés par réaction de $SCl_2$ avec $Cl_2$.

Inversement, le chauffage de $SCl_2$ provoque sa dissociation selon la réaction inverse de la réaction (13).

Ainsi, la réaction du fluorure d'uranium $UF_x$ en suspension dans le monochlorure de soufre est accélérée par la formation de bichlorure et de tétrachlorure de soufre qui sont plus réactifs.

Généralement, on réalise la réaction à des températures de 80 à 250°C, et l'on produit du $UF_4$ qui est insoluble dans les chlorures ou bromures de soufre et ne réagit pas avec eux aux températures utilisées pour la réaction. On peut noter que la réaction ne produit ni composés halogénés mixtes tels que $UF_yCl_z$ ou $UF_yBr_z$ avec $y+z \leq 6$, ni $UCl_6$ ou $UBr_6$.

On peut réaliser la réaction en réacteur clos en introduisant la phase liquide qui entraîne les particules de fluorure d'uranium solide, et en extrayant en fin de réaction la phase plus ou moins fluide résiduelle. Les réactifs liquides $S_2Br_2$ ou $S_2Cl_2$ étant des liquides de faible viscosité, on peut travailler à des températures élevées.

On peut aussi réaliser la réaction en continu en utilisant un réacteur muni d'un système d'avance mécanique permettant d'assurer conjointement l'écoulement de la phase liquide et la progression des solides.

Dans ce cas, on extrait périodiquement, au cours de la réaction, en partie haute du réacteur, la phase gazeuse qui comprend $S_2F_2$, $SF_4$, $Cl_2$ ou $Br_2$ ainsi que des vapeurs de l'agent réducteur liquide.

Lorsqu'on opère en réacteur clos, il est nécessaire de maintenir une masse de réactifs suffisante dans le réacteur pour assurer la fluidité du mélange en fin de réaction. Généralement, on effectue la réaction de façon à réduire entièrement le fluorure d'uranium sous forme de $UF_4$ qui, maintenu dans le réacteur chaud, coagule en particules solides que l'on sépare ensuite de la phase liquide des composés de soufre. On peut éliminer cette phase liquide par évaporation à chaud. Une phase gazeuse riche en halogène favorise le départ du soufre. Dans le cas où l'on utilise un composé chloré du soufre, la dissociation des chlorures supérieurs $SCl_2$ et $SCl_4$ conduit toujours au monochlorure de soufre et à du chlore volatil. On peut ensuite recycler dans le réacteur les réactifs halogénés de soufre en excès.

De préférence, dans ce mode de mise en oeuvre du procédé, on introduit du soufre cristallisé dans la phase réactionnelle pour minimiser la quantité d'halogène utilisée dans la réaction et éviter son départ sous forme gazeuse selon les réactions (8) et (9) ; ainsi on régénère par réaction du soufre avec l'halogène, l'halogénure de soufre utilisé. Ceci peut être effectué facilement, car le soufre est très soluble ainsi que le chlore ou le brome dans les halogénures correspondants de soufre. Par exemple, le soufre cristallisé rhombique qui est la forme ordinaire cristallisée la plus stable du soufre, présente une solubilité mole pour mole ($S_8$-$S_2Cl_2$) à 118°C, ce qui quadruple la quantité de soufre pour la même quantité de chlore. Le $S_2Cl_2$ solubilise à la fois facilement le chlore et réagit avec lui pour former $SCl_2$ qui est partiellement redissocié en $S_2Cl_2$ et $Cl_2$. Dans ce cas, il est important de ne pas introduire plus de soufre sous forme solide que l'on en consommera pendant la réaction de réduction des fluorures d'uranium de façon à ne pas obtenir en fin de réaction du soufre cristallisé mélangé à $UF_4$.

La réalisation des réactions de réduction en milieu halogénure de soufre liquide présente toutefois

certains inconvénients :
- le fort excès d'halogénure de soufre assure une bonne réduction des fluorures d'uranium en $UF_4$ mais nuit à la production directe de $SF_4$,
- l'utilisation de ces agents réducteurs accroît inutilement la masse des réactifs à base de soufre dans l'installation, ce qui alourdit les opérations de séparation,
- la manipulation de la phase liquide de réactifs pose des problèmes car les propriétés physiques de cette phase évoluent au cours de l'avancement de la réaction, transformant une phase liquide fluide en un produit visqueux plus difficile à faire progresser dans le réacteur.

Aussi, selon une variante de ce sixième mode de mise en oeuvre de ce procédé, on évite ces inconvénients en ajoutant un diluant inerte à la phase liquide de l'agent réducteur.

Pour pouvoir être utilisé dans l'invention, le diluant doit présenter les caractéristiques suivantes :
- ne pas réagir avec les fluorures d'uranium $UF_x$,
- ne pas réagir avec les halogènes (chlore et brome), ni avec les halogénures correspondants de soufre,
- rester inerte vis-àvis des fluorures de soufre formés,
- solubiliser peu ces fluorures de soufre,
- être capable de solubiliser les réactifs S et $S_2X_2$ avec $X_2$ représentant le chlore ou le brome,
- ne pas solubiliser le tétrafluorure d'uranium et permettre sa séparation facile en phase liquide,
- présenter un point d'ébullition plus élevé que $SF_4$ et s'en différencier nettement pour faciliter les opérations de séparation,
- présenter un point d'ébullition assez bas pour rendre possibles des réactions thermiques sous pression modérée,
- présenter une faible viscosité et un point de fusion inférieur à 0°C, et
- éventuellement solubiliser les halogènes chlore ou brome.

A titre d'exemples de diluants susceptibles d'être utilisés, on peut citer des composés aliphatiques complètement chlorofluorés, par exemple les alcanes complètement chlorofluorés commercialisés sous le nom de Fréon®, dont les points d'ébullition sont compris entre 0 et 100°C, comme le Fréon 11 ($CCl_3F$), le Fréon 112 ($CCl_2F$-$CCl_2F$), le Fréon 112a ($CClF_2$-$CCl_3$), le Fréon 113 ($CClF_2$-$CCl_2F$), le Fréon 113a ($CCl_3$-$CF_3$), le Fréon 114 ($CClF_2$-$CClF_2$) et le Fréon 114a ($CF_3$-$CClF_2$). On peut aussi utiliser des perfluorocarbones acycliques ou cycliques, plus inertes chimiquement en présence de $S_2F_2$ ou $SF_4$, par exemple les perfluoroalcanes normaux isomères ou leurs mélanges comme le pentforane ($C_5F_{12}$), l'hexforane ($C_6F_{14}$), l'heptforane ($C_7F_{16}$), l'octforane ($C_8F_{18}$), le nonforane ($C_9F_{20}$), ainsi que les fluorocarbones monocycliques comme le benzforène ($C_6F_6$), le toluforène ($C_7F_8$), les forylcyclopentforanes ($C_7F_{14}$), les forylcyclohexforanes ($C_8F_{16}$ ; $C_9F_{18}$) tels que le 1.3.5 triméthforylcyclohexforane et le n-propforylcyclohexforane.

La quantité de diluant utilisée n'est pas critique, elle doit seulement être suffisante pour faciliter le contact entre les fluorures d'uranium solides et l'halogénure de soufre, et constituer un fluide vecteur pour le solide. Généralement, on utilise un volume de diluant représentant de 1 à 5 fois le volume d'halogénure de soufre liquide. Dans ces conditions, le rapport des réactifs est de préférence tel que le rapport $[UF_x]$ /[S] est situé dans l'intervalle de $2(x-4)^{-1}$ à $8(x-4)^{-1}$, et de préférence dans l'intervalle de $2(x-4)^{-1}$ à $4(x-4)^{-1}$, pour être assuré de réduire le fluorure d'uranium en $UF_4$.

Les exemples 9 et 10 qui suivent illustrent la réduction de $UF_5$ par $S_2Cl_2$ liquide dilué par du fréon.

Exemple 9

On utilise le réacteur décrit dans l'exemple 8 dans lequel on amène à réagir 2,5g d'$UF_5$ ($7,5.10^{-3}$ mol) avec 140mg de $S_2Cl_2$ ($1,04.10^{-3}$ mol) au sein de 40 $cm^3$ de Fréon 112 ($CCl_2F$-$CCl_2F$). Les réactants sont dans le rapport $[UF_5]$ /[S] =3,6. Le réacteur est maintenu 3 heures à 80°C sous agitation, après quoi on extrait la phase gazeuse composée de chlore, de $S_2Cl_2$ de la vapeur du fréon, ainsi que de 164mg de $SF_4$, 10mg de $S_2F_2$ et 10mg de $SOF_2$. La partie solide résiduelle est de 2,31g d'$UF_4$ sans soufre.

Exemple 10

De la même manière que dans l'exemple 9, on fait réagir 2,5g d'$UF_5$ ($1,5.10^{-3}$ mol) avec 102mg de $S_2Cl_2$ ($10^{-3}$ mol) auxquels on ajoute 28mg de soufre cristallisé ($8,7.10^{-4}$ atome.g) de sorte que le rapport $[UF_5]$/[S]=4. Le réacteur est maintenu 3 heures à 80°C en présence de 40 $cm^3$ de Fréon 112. Les produits formés sont 175mg de $SF_4$ et 15mg de $SOF_2$. Le solide est $UF_4$ avec quelques % d'$UF_5$.

Lorsqu'on opère dans un réacteur en flux continu, le diluant ou son mélange avec l'halogénure de soufre entraîne la poudre de fluorure d'uranium $UF_x$ dans le réacteur. On peut aussi introduire l'halogénure de soufre liquide séparément.

Comme précédemment pour minimiser la quantité d'halogénure de soufre actif, on introduit du soufre cristallisé pour qu'il réagisse en solution ou en suspension avec l'halogène libéré et se transforme ainsi en halogénure. Le mélange des réactifs et du diluant s'écoule dans le réacteur chauffé à une température de 80 à 200°C pour obtenir une réduction complète du fluorure d'uranium $UF_x$ et la réaction de tout le soufre en suspension avec l'halogène. A la sortie du réacteur, on recueille une phase liquide comprenant le diluant et l'halogénure de soufre en excès qui contient en suspension le tétrafluorure d'uranium. On peut réaliser la séparation des solides en suspension dans la phase liquide à chaud, par exemple à une température de 50 à 120°C, par des moyens classiques en restant à l'abri de l'air. La phase liquide qui est un mélange du diluant et de l'halogénure de soufre n'ayant pas réagi, peut être recyclée dans le réacteur. Les gaz et les vapeurs extraits du réacteur en cours de réaction sont traités pour récupérer le tétrafluorure de soufre.

Selon un septième mode de mise en oeuvre du procédé de l'invention, on fait réagir le fluorure

d'uranium $UF_x$ à l'état liquide avec du soufre à l'état liquide à une température d'au moins 350°C.

Dans ce septième mode de mise en oeuvre du procédé, on forme une phase homogène liquide de soufre et de fluorure d'uranium de basse viscosité, par exemple limitée à 10 poises (1 Pa.s), ce qui impose de travailler à une température d'au moins 350°C.

Lorsqu'on opère à une température de 380°C, la réaction est particulièrement rapide. La phase gazeuse produite comprend du soufre à l'état de vapeur, du $SF_4$ et de faibles quantités de $S_2F_2$, qui dépendent essentiellement du rapport des réactifs $[UF_x]/[S]$. La phase solide comprend $UF_4$ et des fluorures d'uranium non entièrement réduits.

On peut réaliser la réaction dans un réacteur à flux continu. Dans ce cas, on peut introduire le fluorure d'uranium à l'état solide et le soufre à l'état solide ou liquide. De préférence, on introduit conjointement le soufre et le fluorure d'uranium soit sous forme d'un mélange des deux réactifs à l'état solide, soit sous la forme d'un mélange en phase liquide à une température de 120-160°C. La réaction se produit lors du déplacement du flux visqueux liquide par gravité dans le réacteur chauffé entre 350 et 400°C.

La proportion des réactifs introduits est de préférence telle que, dans le cas de $UF_5$, le rapport $[UF_x]$ / [S] soit de $2(x-4)^{-1}$ à $8(x-4)^{-1}$ et de préférence de $2(x-4)^{-1}$ à $4(x(4)^{-1}$, afin d'obtenir une réduction complète du fluorure d'uranium en $UF_4$. Dans le cas de $UF_5$, le rapport des constituants $[UF_x]/[S]$sera de 2 à 4.

Dans les différents modes de mise en oeuvre du procédé décrits ci-dessus, les réactions gaz-solide ou liquide-solide ont des cinétiques assez lentes qui sont limitées par la diffusion et exigent des températures élevées. De plus, l'utilisation d'une phase liquide de soufre entre 120 et 160°C conduit à des proportions importantes de sous-fluorures et exige des opérations supplémentaires de séparation du soufre en excès. Lorsqu'on réalise la réaction en phase liquide homogène, les problèmes posés par la corrosion de l'installation sont très difficiles à surmonter.

On peut toutefois éviter ces inconvénients en utilisant un milieu réactionnel apte à accélérer les cinétiques et à permettre de réaliser les réactions de synthèse de $SF_4$ et de $UF_4$ à des températures plus basses.

Aussi, selon un huitième mode de mise en oeuvre du procédé de l'invention, on fait réagir le fluorure d'uranium $UF_x$ et l'agent réducteur constitué par du soufre ou un composé du soufre en solution dans un solvant. Ce solvant doit présenter les mêmes caractéristiques d'inertie chimique, de solubilisation et de point d'ébullition que le diluant utilisé dans le sixième mode de mise en oeuvre du procédé ; il doit par ailleurs solubiliser suffisamment les fluorures $UF_x$ pour que l'on puisse effectuer la réaction en solution entre le fluorure d'uranium $UF_x$ et l'agent réducteur. De préférence, l'agent réducteur est le soufre ou un halogénure de soufre tel que $S_2Br_2$, $S_2Cl_2$, $SCl_2$ et $SCl_4$.

A titre de solvants susceptibles d'être utilisés pour solubiliser $UF_5$, on peut citer les solvants organiques comme les nitriles, les N-alkylamides et les N-arylamides. Parmi ces solvants de forte constante diélectrique, on peut utiliser en particulier l'acétonitrile, le propionitrile, les nitriles de chaîne plus longue, le benzonitrile, l'acétoxime (N,N-diméthylformamide) qui forment des solutions stables avec $UF_5$ et dans lesquels la solubilité de $UF_5$ est d'au moins 1 g/l à 25°C. Par ailleurs, ces solvants résistent à la chloruration et à la bromuration aux températures modérées ainsi qu'aux fluorures de soufre. La solubilité du soufre dans ces solvants reste faible à température ambiante (inférieure au g/l), mais elle s'accroît à chaud et est de l'ordre de 1,5 g/l à 82°C.

Ces solvants dissolvent les halogènes chlore ou brome, ce qui permet de les retenir en solution après réaction, par exemple mole pour mole à 25°C pour le chlore dans le diméthylformamide. Ces solvants dissolvent également facilement les chlorures et les bromures de soufre. Par ailleurs, la solubilité de l'élément soufre dans ces solvants est renforcée en présence de chlorure ou de bromure de soufre. Bien que les solvants ne conviennent que pour la dissolution de $UF_5$, ils peuvent être utilisés lorsque $UF_5$ contient de petites quantités, quelques pour cent, de fluorures intermédiaires surtout lorsque la taille des cristaux des fluorures intermédiaires est petite ou lorsqu'ils sont inclus dans les agrégats de $UF_5$ solubilisables.

Parmi ces solvants, on préfère utiliser l'acétonitrile qui est un très bon solvant de $UF_5$ (solubilité de 300 g/l à 25°C) et qui résiste particulièrement bien à l'attaque des fluorures de soufre $SF_4$ et $S_2F_2$ jusqu'à des températures de 260°C.

On peut réaliser la réaction dans une enceinte close munie d'un condenseur en utilisant un fort excès de $UF_5$ par rapport sa solubilité limite dans le solvant. On maintient ainsi la solution dans un état de saturation en $UF_5$ par agitation et la cinétique est indépendante de la taille des particules de $UF_5$ utilisées. La réaction peut être effectuée à la température ambiante lorsque l'agent réducteur est $SCl_4$, et entre 40 et 150°C lorsque l'agent réducteur est $SCl_2$, $S_2Cl_2$ ou $S_2Br_2$.

L'exemple 11 qui suit illustre la réduction de $UF_5$ par $S_2Cl_2$ liquide en solution dans du diméthylformamide.

<u>Exemple 11</u>

Cet essai est conduit dans le réacteur décrit dans l'exemple 8, et l'on amène à réagir 2,5g de $UF_5$ ($7,5.10^{-3}$ mol) avec 140mg de $S_2Cl_2$ liquide comme dans l'exemple 9, mais en présence de 40cm$^3$ de diméthylformamide (DMF) fraîchement distillé. Le rapport des réactants $[UF_5]/[S]$ est de 3,6. Le mélange liquide réactionnel est agité pendant 2 heures à la température de 80°C. La réaction amène en phase gazeuse du chlore, du $SF_4$ 162 mg, du $SOF_2$ 22 mg et moins de 10 mg de $S_2F_2$. Le solide récupéré est de l'$UF_4$ sans fluorure intermédiaire ni $UF_5$. Il est exempt de soufre.

Si l'on utilise comme agent réducteur du soufre cristallisé, il est nécessaire de chauffer à une température de 130 à 150°C.

De préférence, lorsque l'agent réducteur est constitué par $SCl_2$ ou $S_2Cl_2$, on utilise conjointement du soufre ; ainsi le chlore libéré par les réactions (8) et (9) est dissous dans le solvant et peut réagir avec le soufre pour reformer du chlorure de soufre.

Les exemples 12 et 13 qui suivent illustrent la réduction de $UF_5$ par un chlorure de soufre en solution dans un solvant organique.

Exemple 12

On procède dans cet exemple de la même façon que dans l'essai précédent avec 2,5g d'$UF_5$ ($7,5.10^{-4}$ mol) mais le soufre est amené pour 100 mg par $S_2Cl_2$ liquide ($7,5.10^{-4}$ mol) et pour 15 mg par du soufre cristallisé ($4,7.10^{-3}$ atome.g) dans 40 $cm^3$ d'acétonitrile $CH_3CN$ fraîchement distillé. Le rapport des réactants est de 3,8. La solution est agitée pendant 2 heures à 75°C. Les produits formés sont $SF_4$ 180 mg et $SOF_2$ 12 mg mais sans $S_2F_2$. Le solide recueilli : 2,33g d'$UF_4$ après évacuation complète du solvant, ne contient ni soufre résiduel ni fluorure $UF_X$.

Exemple 13

De la même façon que dans l'exemple 11, on amène à réagir 1,25g de $UF_5$ ($3,75.10^{-3}$ mol) avec 160mg de $SCl_4$ en solution dans 40 $cm^3$ d'acétonitrile. Le rapport des réactants est $[UF_5]/[S]=4$. Le réacteur est chauffé pendant 1 heure à 70°C sous agitation. Les produits de la réaction sont 81mg de $SF_4$, 8mg de $S_2F_2$, des traces de $SOF_2$ et $S_2Cl_2$ ainsi que du chlore gazeux. Le solide recueilli est de l'$UF_4$ (1,12g) sans uranium à des valences supérieures, ni soufre résiduel (<0,1%). Le $SCl_4$ réagit avec $UF_5$ selon la réaction $SCl_4+4UF_5 \rightarrow SF_4+4UF_4+2Cl_2$ (14).

Dans ce huitième mode de réalisation, on recueille séquentiellement les produits gazeux de la réaction qui sont constitués par $SF_4$, $S_2F_2$ et $Cl_2$ ou $Br_2$ ainsi que par des fluorures parasites comme $SOF_2$, avec un excès éventuel de réactifs et de la vapeur de solvant.

Au cours de la réaction, le solvant prend une coloration verte qui est due à la formation d'un précipité colloïdal d'uranium répondant à la formule $UF_4.CH_3CN$. Après séparation de ce précipité, on peut récupérer l'$UF_4$ anhydre en éliminant la molécule de solvant par chauffage. Lorsqu'on utilise d'autres solvants que l'acétonitrile, on obtient également des composés d'addition analogues entre $UF_4$ et le solvant.

Dans ce huitième mode de mise en oeuvre du procédé, il est important de ne pas introduire de composés capables de produire de l'acide fluorhydrique comme $OH^-$, $H_2O$, $SH_2$, qui participent à la solvatation du tétrafluorure d'uranium et entravent la formation du précipité. Dans ce cas, il faut ramener la solution à sec par évaporation du solvant pour obtenir le composé solide $UF_4.2HF.2CH_3CN$, puis le dissocier thermiquement pour récupérer $UF_4$.

On peut aussi réaliser la réaction continu en mettant en circulation dans un réacteur la phase fluide homogène et en recueillant les gaz produits à la partie supérieure du réacteur.

Dans ce cas, on peut alimenter le réacteur en poudre d'$UF_5$ entraînée ou non par le solvant ; le composé de soufre qui peut être du soufre pulvérisé anhydre et/ou l'un des composés halogénés du soufre décrits précédemment peut être introduit seul ou avec le solvant.

En raison de la bonne solubilité de $UF_5$ dans les solvants organiques, on introduit un fort excès de $UF_5$ par rapport à la solubilité limite à la température de la réaction.

Lorsque l'agent réducteur est du soufre, on l'introduit de préférence à l'état de poudre anhydre en même temps que $UF_5$. Lorsque l'agent réducteur est un composé de soufre liquide, on répartit son introduction dans le réacteur tout au long de la progression du fluide de manière avoir en solution les concentrations de fluorure d'uranium et de composé de soufre souhaitées. Généralement, le réacteur est chauffé à une température de 40 à 150°C. Les réactifs sont dans le rapport $[UF_X]$ / [S] allant de $2(x-4)^{-1}$ à $8(x-4)^{-1}$, et préférentiellement pour obtenir une réduction complète du fluorure d'uranium UF en $UF_4$, on maintient le rapport $[UF_X]/[S]$ dans la gamme de $2(x-4)^{-1}$ à $4(x-4)^{-1}$.

Dans le cas de $UF_5$, le rapport est de 2 à 4.

On extrait périodiquement les gaz du réacteur après condensation des vapeurs de faible tension de vapeur telles que $S_2Cl_2$, $S_2Br_2$ et le solvant. On traite ensuite les produits gazeux de la réaction qui sont $SF_4$, $S_2F_2$ et $Cl_2$ ou $Br_2$ comme on l'a décrit précédemment.

A la sortie du réacteur, on récupère le tétrafluorure d'uranium qui est présent sous la forme d'un précipité colloïdal par des techniques classiques, par exemple par sédimentation, filtration ou centrifugation. On lave ensuite le précipité au moyen du solvant utilisé pour le débarrasser éventuellement de l'uranium à la valence (V) qui pourrait être solubilisé dans le cas de l'acétonitrile sous la forme $[UF_4(CH_3CN)_4][UF_6]$. De préférence, on réalise ce lavage à chaud, par exemple à 40°C pour éliminer le $SF_4$ qui pourrait être retenu sous la forme d'un complexe avec $UF_5$ mais qui est dissocié audessus de la température ambiante. Après séchage et dissociation du composé d'addition soluble $UF_4.CH_3CN$, on recueille le tétrafluorure d'uranium sous la forme d'une poudre anhydre pure et on recueille le solvant provenant du séchage du colloïde par condensation. On l'utilise ensuite pour le lavage du précipité d'uranium, puis on le recycle dans le réacteur.

Dans tous les modes de mise en oeuvre du procédé de l'invention, la réactivité des fluorures de soufre vis-à-vis de l'eau dès la température ambiante, des groupements hydroxyle, des oxydes et de la plupart des composés organiques à chaud, impose d'opérer dans des conditions particulières pour éviter ces réactions.

Ainsi, il est important d'utiliser un matériel rigoureusement anhydre et préalablement desséché par un réactif chimique comme les agents oxydants fluorés puissants inorganiques. De même, les réactifs doivent être déshydratés et séchés et il faut éviter tout contact entre le matériel, les réactifs ou le milieu de réaction et des produits oganiques présentant des groupements carbonyle,carboxyle, hydroxyle, etc... Il faut éviter également l'emploi d'oxydes qui sont fluorés à chaud par $SF_4$ et utiliser des appareillages métalliques connus pour résister à la corrosion par $SH_2$ et les produits fluorés.

De préférence, les systèmes d'extraction des produits solides doivent comporter des sas balayables par gaz inert tel que l'azote ou l'argon.

Ainsi, les réactifs utilisés pour la réaction de réduction doivent subir des prétraitements pour s'assurer qu'ils sont parfaitement anhydres. Le soufre peut être déshydraté au niveau solide ou à l'état de vapeur avant son introduction dans le réacteur. Les fluorures d'uranium particulièrement hygroscopiques doivent être manipulés sous atmosphère neutre et en évitant autant que possible les transferts excessifs. Les gaz, vapeurs, diluants, solvants sont soigneusement déshydratés avant usage et toutes les extractions de gaz, de solides, de liquides et les manipulations sur les produits destinés à être recyclés sont faites sous atmosphère contrôlée.

Dans la plupart des modes de mise en oeuvre du procédé de l'invention, les produits intéressants, soit le tétrafluorure de soufre et le tétrafluorure d'uranium recueillis contiennent encore des impuretés et il est nécessaire de les soumettre à une purification.

Dans le cas du tétrafluorure de soufre, les principales impuretés sont $S_2F_2$, $SOF_2$, HF et éventuellement $SF_6$.

Lorsqu'on utilise des réactions mettant en jeu des halogènes ou leurs combinaisons avec le soufre, le tétrafluorure de soufre peut aussi comporter comme impuretés du chlore, du brome et des chlorures ou des bromures de soufre.

On peut éliminer les sous-fluorures de soufre en les transformant en $SF_4$ et soufre par liquéfaction, pyrolyse ou catalyse, ainsi que par fluoration en particulier avec le fluor, comme cela est décrit dans le premier mode de mise en oeuvre du procédé.

On peut éliminer HF en réalisant un complexe avec un fluorure alcalin comme NaF ou CsF qui relâche l'acide fluorhydrique par chauffage à 400°C.

Les impuretés chlorées $SCl_2$, $S_2Cl_2$ peuvent être éliminées par réaction sur du mercure et distillation.

On peut encore recourir aux méthodes de chromatographie en phase gazeuse qui permettent la séparation des fluorures et oxyfluorures difficiles à séparer comme $SOF_2$ en utilisant comme phase stationnaire du fluorure de sodium recouvert de tétraméthylènesulfone.

On peut encore purifier le $SF_4$ du mélange gazeux en formant un complexe solide de $SF_4$ avec les fluorures inorganiques qui présentent une acidité de Lewis comme cela a été décrit précédemment à propos du quatrième mode de mise en oeuvre du procédé.

Le tétrafluorure d'uranium recueilli en fin de réaction peut contenir deux sortes d'impuretés qui sont respectivement des fluorures d'uranium à une valence supérieure à 4 et du soufre.

On peut éliminer préalablement le soufre si l'on prend soin d'effectuer les séparations gaz-solides à chaud comme on l'a décrit ci-dessus. L'élimination du soufre cristallisé en surface sur les particules du fluorure d'uranium $UF_4$ peut être réalisée en faisant réagir le soufre avec un élément gazeux pour former un composé moléculaire du soufre. Dans ce but, on peut maintenir le tétrafluorure d'uranium solide à une température de 25 à 400°C sous un courant de chlore afin de former $SCl_2$ et $S_2Cl_2$ qui ne réagissent pas avec $UF_4$ à ces températures et qui peuvent favoriser la complète réduction des fluorures résiduels de formule $UF_x$ en $UF_4$. On peut aussi maintenir le tétrafluorure d'uranium solide à une température de 200 à 500°C sous courant d'hydrogène pour former $H_2S$. Cette façon d'opérer permet également d'obtenir la réduction complète des fluorures d'uranium résiduels en $UF_4$. Pour accélérer cette réaction, on peut d'ailleurs ajouter du $H_2S$ au courant d'hydrogène car la réduction des fluorures d'uranium en $UF_4$ par l'hydrogène est trop lente à ces températures. Ces traitements doivent bien entendu être effectués en atmosphère anhydre car sinon, à partir de 200°C, on hydrolyserait $UF_4$ en $UO_2$ et les autres fluorures d'uranium en $UO_2F_2$.

On peut encore éliminer le soufre en faisant réagir le tétrafluorure d'uranium produit avec de l'oxygène anhydre. En effet, aucune réaction n'est observée entre les fluorures d'uranium ($UF_x$, $UF_4$) et l'oxygène pour des températures allant jusqu'à 700-800°C. En revanche, l'oxygène forme avec le soufre de l'anhydride sulfureux et de petites quantités d'anhydride sulfurique $SO_3$ qui se trouve lui-même dissocié à haute température.

Pour éviter la présence d'anhydride sulfurique, il est préférable d'opérer à des températures élevées car $SO_3$ réagit avec les fluorures pour former des fluorures intermédiaires du type $UF_2(SO_3F_3)$ ou des fluorosulfates d'uranium (IV) ou (V) qui sont décomposés au-delà de 300°C en $UF_4$.

En revanche, l'anhydride sulfureux $SO_2$ formé réduit les fluorures d'uranium en $UF_4$ à des tempratures de 200 à 300°C avec formation de chlorure de sulfuryle $SO_2F_2$ qui est un gaz sans odeur pouvant être évacué facilement. Ce traitement de purification doit être effectué à l'abri de l'eau pour éviter la formation de fluorure d'uranyle.

## Revendications

1. Procédé de préparation de tétrafluorure de soufre, caractérisé en ce qu'il consiste à réduire un fluorure d'uranium de formule $UF_x$ avec $4<x\leq5$ au moyen d'un agent réducteur constitué par du soufre ou un composé du soufre.

2. Procédé selon la revendication 1, caractérisé en ce que l'agent réducteur est un composé de soufre choisi parmi les halogénures de soufre, le sulfure de carbone $CS_2$ et l'hydrogène sulfuré $H_2S$.

3. Procédé selon la revendication 2, caractérisé en ce que les halogénures de soufre sont choisis parmi les chlorures et bromures de soufre de formules $S_2Br_2$, $SCl_4$, $S_2Cl_2$ et $SCl_2$ et le sous-fluorure de soufre de formule $S_2F_2$.

4. Procédé selon l'une quelconque des revendications 1 à 3, caractérisé en ce que l'on réduit le fluorure d'uranium en $UF_4$.

5. Procédé selon l'une quelconque des revendications 1 et 4, caractérisé en ce que l'on fait réagir des particules solides de fluorure d'uranium $UF_x$ avec de la vapeur de soufre à une température de 100 à 400°C.

6. Procédé selon la revendication 5, caractérisé en ce que l'on effectue la réaction en présence de chlore ou de brome gazeux.

7. Procédé selon la revendication 5, caractérisé en ce que l'on réalise la réaction en présence d'au moins un halogénure de soufre gazeux choisi parmi les chlorures de soufre $S_2Cl_2$ et $SCl_2$ et le bromure de soufre $S_2Br_2$.

8. Procédé selon la revendication 5, caractérisé en ce que l'on réalise la réaction en présence de chlore gazeux et d'au moins un chlorure de soufre choisi parmi les chlorures de formule $S_2Cl_2$ et $SCl_2$.

9. Procédé selon la revendication 5, caractérisé en ce que l'on réalise la réaction en présence de brome gazeux et de bromure de soufre de formule $S_2Br_2$.

10. Procédé selon l'une quelconque des revendications 1 et 4, caractérisé en ce que l'on fait réagir des particules solides de fluorure d'uranium $UF_x$ avec un agent réducteur en phase gazeuse constitué par au moins un halogénure de soufre choisi parmi le bromure de soufre $S_2Br_2$ et les chlorures de soufre $S_2Cl_2$ et $SCl_2$.

11. Procédé selon la revendication 10, caractérisé en ce que la phase gazeuse comprend également l'halogène correspondant choisi parmi $Cl_2$ et $Br_2$.

12. Procédé selon l'une quelconque des revendications 1 et 4, caractérisé en ce que l'on fait réagir des particules solides de fluorure d'uranium $UF_x$ avec un agent réducteur en phase gazeuse constitué par de l'hydrogène sulfuré $H_2S$.

13. Procédé selon l'une quelconque des revendications 1 et 4, caractérisé en ce que l'on fait réagir des particules solides de fluorures d'uranium $UF_x$ avec un agent réducteur en phase gazeuse constitué par du sulfure de carbone $CS_2$.

14. Procédé selon l'une quelconque des revendications 1 et 4, caractérisé en ce que l'on fait réagir des particules solides de fluorure d'uranium $UF_x$ avec un agent réducteur en phase liquide constitué par du soufre.

15. Procédé selon l'une quelconque des revendications 1 et 4, caractérisé en ce que l'on fait réagir des particules de fluorure d'uranium $UF_x$ solides avec un agent réducteur en phase liquide constitué par du monobromure de soufre $S_2Br_2$ ou du monochlorure de soufre $S_2Cl_2$.

16. Procédé selon la revendication 15, caractérisé en ce que l'on ajoute du soufre à la phase liquide de monochlorure de soufre ou de monobromure de soufre.

17. Procédé selon l'une quelconque des revendications 15 et 16, caractérisé en ce que l'on ajoute un diluant inerte à la phase liquide.

18. Procédé selon la revendication 17, caractérisé en ce que le diluant inerte est choisi parmi les alcanes complètement chlorofluorés, les perfluoroalcanes et les fluorocarbones monocycliques.

19. Procédé selon l'une quelconque des revendications 1 et 4, caractérisé en ce que l'on fait réagir le fluorure d'uranium $UF_x$ à l'état liquide avec du soufre à l'état liquide à une température d'au moins 350°C.

20. Procédé selon l'une quelconque des revendications 1 et 4, caractérisé en ce que l'on fait réagir le fluorure d'uranium $UF_x$ et l'agent réducteur en solution dans un solvant.

21. Procédé selon la revendication 20, caractérisé en ce que l'agent réducteur est du soufre ou un halogénure de soufre choisi parmi $S_2Br_2$, $S_2Cl_2$, $SCl_2$ et $SCl_4$.

22. Procédé selon l'une quelconque des revendications 20 et 21, caractérisé en ce que le solvant est choisi parmi les nitriles, les N-alkylamides ou les N-arylamides.

23. Procédé selon la revendication 22, caractérisé en ce que le solvant est l'acétonitrile.

24. Procédé selon l'une quelconque des revendications 1 à 23, caractérisé en ce que le fluorure d'uranium $UF_x$ est $UF_5$.

25. Procédé selon l'une quelconque des revendications 1 à 4, caractérisé en ce que l'on soumet la phase gazeuse contenant le tétrafluorure de soufre obtenu à un traitement annexe pour tranformer le sous-fluorure de soufre $S_2F_2$ présent dans la phase gazeuse en $SF_4$.

26. Procédé selon la revendication 4, caractérisé en ce que l'$UF_4$ est soumis à un traitement de purification pour le débarrasser du soufre.

27. Procédé selon la revendication 26, caractérisé en ce que ce traitement est une réaction avec le chlore à une température de 25 à 400°C.

## Claims

1. Process for the preparation of sulphur tetrafluoride, characterized in that it consists in reducing a uranium fluoride of formula $UF_x$ where $4<x\leq 5$, by means of a reducing agent composed of sulphur or a sulphur compound.

2. Process according to Claim 1, characterized in that the reducing agent is a sulphur compound chosen from the sulphur halides, carbon disulphide $CS_2$ and hydrogen sulphide $H_2S$.

3. Process according to Claim 2, characterized in that the sulphur halides are chosen from sulphur chlorides and bromides of formulae $S_2Br_2$, $SCl_4$, $S_2Cl_2$ and $SCl_2$ and sulphur subfluoride of formula $S_2F_2$.

4. Process according to any one of Claims 1 to 3, characterized in that the uranium fluoride is reduced to $UF_4$.

5. Process according to either of Claims 1 and 4, characterized in that solid particles of uranium fluoride $UF_x$ are reacted with sulphur vapour at a temperature of 100 to 400°C.

6. Process according to Claim 5, characterized in that the reaction is carried out in the presence of chlorine or bromine gas.

7. Process according to Claim 5, characterized in that the reaction is carried out in the presence of at least one gaseous sulphur halide chosen from the

sulphur chlorides $S_2Cl_2$ and $SCl_2$ and sulphur bromide $S_2Br_2$.

8. Process according to Claim 5, characterized in that the reaction is carried out in the presence of chlorine gas and of at least one sulphur chloride chosen from the chlorides of formula $S_2Cl_2$ and $SCl_2$.

9. Process according to Claim 5, characterized in that the reaction is carried out in the presence of bromine gas and sulphur bromide of formula $S_2Br_2$.

10. Process according to either of Claims 1 and 4, characterized in that solid particles of uranium fluoride $UF_x$ are reacted with a reducing agent in the gaseous phase composed of at least one sulphur halide chosen from sulphur bromide $S_2Br_2$ and the sulphur chlorides $S_2Cl_2$ and $SCl_2$.

11. Process according to Claim 10, characterized in that the gaseous phase also comprises the corresponding halogen chosen from $Cl_2$ and $Br_2$.

12. Process according to either of Claims 1 and 4, characterized in that solid particles of uranium fluoride $UF_x$ are reacted with a reducing agent in the gaseous phase composed of hydrogen sulphide $H_2S$.

13. Process according to either of Claims 1 and 4, characterized in that solid particles of uranium fluoride $UF_x$ are reacted with a reducing agent in the gaseous phase composed of carbon disulphide $CS_2$.

14. Process according to either of Claims 1 and 4, characterized in that solid particles of uranium fluoride $UF_x$ are reacted with a reducing agent in the liquid phase composed of sulphur.

15. Process according to either of Claims 1 and 4, characterized in that solid particles of uranium fluoride $UF_x$ are reacted with a reducing agent in the liquid phase composed of sulphur monobromide $S_2Br_2$ or sulphur monochloride $S_2Cl_2$.

16. Process according to Claim 15, characterized in that sulphur is added to the liquid phase of sulphur monochloride or sulphur monobromide.

17. Process according to either of Claims 15 and 16, characterized in that an inert diluant is added to the liquid phase.

18. Process according to Claim 17, characterized in that the inert diluant is chosen from completely chlorofluorinated alkanes, perfluoroalkanes and monocyclic fluorocarbons.

19. Process according to either of Claims 1 and 4, characterized in that the uranium fluoride $UF_x$ in the liquid state is reacted with sulphur in the liquid state at a temperature of at least 350°C.

20. Process according to either of Claims 1 and 4, characterized in that the uranium fluoride $UF_x$ and the reducing agent are reacted in solution in a solvent.

21. Process according to Claim 20, characterized in that the reducing agent is sulphur or a sulphur halide chosen from $S_2Br_2$, $S_2Cl_2$ and $SCl_4$.

22. Process according to either of Claims 20 and 21, characterized in that the solvent is chosen from nitriles, N-alkylamides or N-arylamides.

23. Process according to Claim 22, characterized in that the solvent is acetonitrile.

24. Process according to any one of Claims 1 to 23, characterized in that the uranium fluoride $UF_x$ is $UF_5$.

25. Process according to any one of Claims 1 to 4, characterized in that the gaseous phase containing sulphur tetrafluoride which is obtained is subjected to in additional treatment to convert the sulphur subfluoride $S_2F_2$ present in the gaseous phase to $SF_4$.

26. Process according to Claim 4, characterized in that the $UF_4$ is subjected to a purification treatment for the removal of sulphur.

27. Process according to Claim 26, characterized in that this treatment is a reaction with chlorine at a temperature of 25 to 400°C.

**Patentansprüche**

1. Verfahren zur Herstellung von Schwefeltetrafluorid, dadurch gekennzeichnet, daß es darin besteht, daß ein Uranfluorid der Formel $UF_x$ mit $4<x\leq5$ mittels eines Reduktionsmittel, das aus Schwefel oder einer Schwefelverbindung besteht, reduziert wird.

2. Verfahren nach Anspruch 1, dadurch gekennzeichnet, daß das Reduktionsmittel eine Schwefelverbindung ist, die ausgewählt wird aus den Schwefelhalogeniden, Schwefelkohlenstoff $CS_2$ und Schwefelwasserstoff $H_2S$.

3. Verfahren nach Anspruch 2, dadurch gekennzeichnet, daß die Schwefelhalogenide ausgewählt werden aus den Schwefelchloriden und Schwefelbromiden der Formeln $S_2Br_2$, $SCl_4$, $S_2Cl_2$ und $SCl_2$ und dem Schwefelsubfluorid der Formel $S_2F_2$.

4. Verfahren nach einem der Ansprüche 1 bis 3, dadurch gekennzeichnet, daß das Uranfluorid zu $UF_4$ reduziert wird.

5. Verfahren nach einem der Ansprüche 1 und 4, dadurch gekennzeichnet, daß man feste Teilchen aus Uranfluorid $UF_x$ mit Schwefeldampf bei einer Temperatur von 100 bis 400°C reagieren läßt.

6. Verfahren nach Anspruch 5, dadurch gekennzeichnet, daß man die Reaktion in Gegenwart von gasförmigem Chlor oder Brom durchführt.

7. Verfahren nach Anspruch 5, dadurch gekennzeichnet, daß man die Reaktion in Gegenwart mindestens eines gasförmigen Schwefelhalogenids durchführt, das ausgewählt wird aus den Schwefelchloriden $S_2Cl_2$ und $SCl_2$ und Schwefelbromid $S_2Br_2$.

8. Verfahren nach Anspruch 5, dadurch gekennzeichnet, daß man die Reaktion in Gegenwart von gasförmigem Chlor und mindestens eines Schwefelchlorids, ausgewählt aus den Chloriden der Formel $S_2Cl_2$ und $SCl_2$, durchführt.

9. Verfahren nach Anspruch 5, dadurch gekennzeichnet, daß man die Reaktion in Gegenwart von gasförmigem Brom und von Schwefelbromid der Formel $S_2Br_2$ durchführt.

10. Verfahren nach einem der Ansprüche 1 und 4, dadurch gekennzeichnet, daß man feste Teilchen aus Uranfluorid $UF_x$ mit einem Reduktionsmittel in einer Gasphase reagieren läßt, die besteht aus mindestens einem Schwefelhalogenid, ausgewählt aus

dem Schwefelbromid $S_2Br_2$ und den Schwefelchloriden $S_2Cl_2$ und $SCl_2$.

11. Verfahren nach Anspruch 10, dadurch gekennzeichnet, daß die Gasphase außerdem das entsprechende Halogen, ausgewählt aus $Cl_2$ und $Br_2$, umfaßt.

12. Verfahren nach einem der Ansprüche 1 und 4, dadurch gekennzeichnet, daß man feste Teilchen aus Uranfluorid $UF_x$ mit einem Reduktionsmittel in einer Gasphase reagieren läßt, die aus Schwefelwasserstoff $N_2S$ besteht.

13. Verfahren nach einem der Ansprüche 1 und 4, dadurch gekennzeichnet, daß man feste Teilchen aus Uranfluoriden $UF_x$ in der Gasphase, die aus Schwefelkohlenstoff $CS_2$ besteht, mit einem Reduktionsmittel reagieren läßt.

4. Verfahren nach einem der Ansprüche 1 und 4, dadurch gekennzeichnet, daß man feste Teilchen aus Uranfluorid $UF_x$ in flüssiger Phase, die aus Schwefel besteht, mit einem Reduktionsmittel reagieren läßt.

15. Verfahren nach einem der Ansprüche 1 und 4, dadurch gekennzeichnet, daß man feste Teilchen aus Uranfluorid $UF_x$ in flüssiger Phase, die aus dem Schwefelmonobromid $S_2Br_2$ oder dem Schwefelmonochlorid $S_2Cl_2$ besteht, mit einem Reduktionsmittel reagieren läßt.

16. Verfahren nach Anspruch 15, dadurch gekennzeichnet, daß man der flüssigen Phase aus Schwefelmonochlorid oder Schwefelmonobromid Schwefel zusetzt.

17. Verfahren nach einem der Ansprüche 15 und 16, dadurch gekennzeichnet, daß man ein gegenüber der flüssigen Phase inertes Verdünnungsmittel zugibt.

18. Verfahren nach Anspruch 17, dadurch gekennzeichnet, daß das inerte Verdünnungsmittel ausgewählt wird aus den vollständig chlorofluorierten Alkanen, Perfluoroalkanen und monocyclischen Fluorkohlenstoffen.

19. Verfahren nach einem der Ansprüche 1 und 4, dadurch gekennzeichnet, daß man das Uranfluorid $UF_x$ in flüssigem Zustand mit Schwefel in flüssigem Zustand bei einer Temperatur von mindestens 350°C reagieren läßt.

20. Verfahren nach einem der Ansprüche 1 und 4, dadurch gekennzeichnet, daß man das Uranfluorid $UF_x$ und das Reduktionsmittel, gelöst in einem Lösungsmittel, reagieren läßt.

21. Verfahren nach Anspruch 20, dadurch gekennzeichnet, daß das Reduktionsmittel Schwefel oder ein Schwefelhalogenid, ausgewählt aus $S_2Br_2$, $S_2Cl_2$, $SCl_2$ und $SCl_4$, ist.

22. Verfahren nach einem der Ansprüche 20 und 21, dadurch gekennzeichnet, daß das Lösungsmittel ausgewählt wird aus den Nitrilen, N-Alkylamiden oder N-Arylamiden.

23. Verfahren nach Anspruch 22, dadurch gekennzeichnet, daß das Lösungsmittel Acetonitril ist.

24. Verfahren nach einem der Ansprüche 1 bis 23, dadurch gekennzeichnet, daß das Uranfluorid $UF_x$ $UF_5$ ist.

25. Verfahren nach einem der Ansprüche 1 bis 4, dadurch gekennzeichnet, daß man die Gasphase, die das erhaltene Schwefeltetrafluorid enthält, einer Nachbehandlung unterwirft zur Umwandlung des in der Gasphase vorliegenden Schwefelsubfluorids $S_2F_2$ in $SF_4$.

26. Verfahren nach Anspruch 4, dadurch gekennzeichnet, daß man das $UF_4$ einer Reinigungsbehandlung unterzieht, um den Schwefel zu entfernen.

27. Verfahren nach Anspruch 26, dadurch gekennzeichnet, daß es sich bei dieser Behandlung handelt um eine Reaktion mit dem Chlor bei einer Temperatur von 25 bis 400°C.